# EUROPEAN PATENT SPECIFICATION

(11) **EP 2 527 205 B1**
(45) Date of publication and mention of the grant of the patent: **14.10.2015**
(21) Application number: 11004361.9
(22) Date of filing: 27.05.2011
(51) Int. Cl.: B60R 16/04, H01M 2/10

(54) **Battery console for a vehicle**
Batteriekonsole für ein Fahrzeug
Console de batterie pour véhicule

(43) Date of publication of application: 28.11.2012
(73) Proprietor: Volvo Car Corporation, 40 531 Göteborg (SE)
(72) Inventor: Andersson, Erik, 43364 Sävedalen (SE); Gullman, Magnus, 43655 Hovås (SE); Karlsson, Jan, 42932 Kullavik (SE); Fällmar, Magnus, 41703 Göteborg (SE); Kela, Sakarias, 41101 Göteborg (SE)
(74) Representative: Widahl, Jenny Marie

(56) References cited:
- EP-A1- 1 717 883
- DE-A1- 10 214 048
- FR-A1- 2 916 387
- JP-A- 4 329 258
- US-A- 3 053 336
- US-A- 5 484 667

## Description

### Technical field

Embodiments herein relate to a battery console. In particular they relate to a battery console for a vehicle.

### Background

Earlier assemblies for fixing a battery to a vehicle often have used one or more rigid clamps or some kind of lid for retaining the battery within a battery console during vehicle travel. In order to accommodate batteries of different lengths a clamp is sometimes provided at a long side of a battery and a spacer placed at either or both ends of the battery. As the batteries often, for packaging reasons, are placed with their longer sides extending longitudinally of the vehicle placement of a bracket at a long side of the battery often has the result that the bracket comes close to the engine or close to the wall of the engine compartment. Such known arrangements, as described above, will usually have to be dimensioned to withstand considerable forces as the battery may become accelerated during vehicle travel. Such dimensioning will also cause these arrangements to be fairly costly and to be rather space consuming. These space requirements will, due to the limited space usually available, often also make mounting/dismounting of batteries using such known arrangements cumbersome due to the resulting small clearances to adjacent structures, such as the engine or the walls of the engine compartment.

DE 102 14 048 A1 discloses a previously known assembly for fixing a battery to a vehicle. This vehicle battery securing device uses retaining elements and clamp element cooperating with opposite ends of a battery foot. The device secures a vehicle battery in place in or on an automobile via battery retaining elements of a battery console, which grip the battery foot at one end and a clamp element, e.g. a clamp rod or clamp rail, clipped over the opposite end of the battery foot.

### Summary

Embodiments herein aim to provide an improved battery console for a vehicle battery, such as a starter battery, which battery console can be produced at low cost, can be given a low weight and which allows for ease of mounting and fixing of a battery, and which battery console minimizes risks associated with mounting and fixing of vehicle batteries.

This is provided by a battery console for a vehicle having a battery compartment comprising a floor and a clamping member for fixation of a battery to the battery compartment, wherein the battery compartment further comprises a rear wall, and respective left and right sidewalls, which walls respectively extend fully along the rear, left and right sides of the floor; and wherein the clamping member is a bracket which is attachable to the floor of the battery compartment at a side of the floor opposing the rear wall and which bracket has a retaining flange for at least partially clamping a bottom flange of a battery placed in the battery compartment; and wherein the respective left and right sidewalls directly adjacent to the rear wall and connected thereto has a respective channeled section, which extend partially along the respective left and right sidewalls, which respective channeled section is provided for partially receiving the bottom flange of a battery placed in the battery compartment.

The compact design of the battery console with the clamping member or bracket as described above allows for reduced packaging space requirements and an improved accessibility for mounting/dismounting of a battery to the battery console. Furthermore, the respective channeled sections also provides for retaining the battery in the battery compartment should the battery for some reason be accelerated upwards from the battery compartment, i.e. in a direction away from the floor thereof.

According to a second aspect the bracket further has a first and a second downwardly protruding flange and the floor is provided with two openings for receiving the first and the second downwardly protruding flanges of the bracket when attached to the floor of the battery compartment.

The first and second downwardly protruding flanges of the bracket, as described for the second aspect, facilitate positioning thereof during mounting. These downwardly protruding flanges also provides an anchoring of the bracket to the battery compartment improving the safety should the battery for some reason be accelerated outward of the battery compartment, i.e. in a direction away from the rear wall, whereby the bracket could be subjected excessive forces. The anchoring of the bracket also makes it possible to reduce the dimensions of the bracket, e.g. the thickness of the sheet metal used therefore, and to use ordinary steel for the bracket, ensuring low cost without compromising the safety of the arrangement.

According to a third aspect the battery compartment is provided with one or more wiring attachment points, which wiring attachment points are integrally formed with the battery compartment.

According to a fourth aspect at least one of the one or more wiring attachment points integrally formed with the battery compartment is essentially hook shaped and protrudes outwardly of the battery compartment from either of the rear wall or the respective left and right sidewalls.

The provision of integrally formed wiring attachment points, as described for the third and fourth aspects, eliminates the need for separate cable fixing brackets which facilitates assembly and mounting, reduces cost, and further improves the packaging space requirements.

According to a fifth aspect the battery console further comprises a spacer adaptor for being received and held adjacent the rear wall by the respective channeled sections.

According to a sixth aspect the spacer adaptor further is provided with at least one battery support flange for at least partially receiving the bottom flange of a battery placed in the battery compartment, which battery support flange generally is directed away from the rear wall when received and held adjacent thereto.

The spacer adaptor, as described for the fifth and sixth aspects, makes it possible to use the same battery console and bracket also for mounting of a reduced-length battery without the provision of additional attachment points for the bracket. The provision of a single bracket attachment point allows for maintaining a low weight design. The spacer adaptor also keeps to a minimum the packaging space requirements as well as the number of additional components required for mounting of such a reduced-length battery to the battery compartment. The battery support flange provides for further improved retention of a reduced-length battery mounted to the battery compartment.

According to a seventh aspect the bracket further comprises one or more wiring attachment points, which wiring attachment points are integrally formed with the bracket.

According to an eighth aspect the bracket is made from a single piece of plate steel and that the wiring attachment points, when the bracket is attached to the battery compartment, are provided at flanges protruding generally upwardly from the floor.

The provision of wiring attachment points at the bracket, as described for the seventh and eighth aspects, further contributes to eliminate the need for separate cable fixing brackets, which facilitates assembly and mounting, reduces cost, and further improves the packaging space requirements. Making the bracket from a single piece of plate steel provides for simple and cost efficient manufacture thereof whilst at the same time ensuring a design which does not compromise with the safety of the arrangement.

According to a ninth aspect a respective contact element is provided in the respective channeled section.

According to a tenth aspect the respective contact elements protrudes inwardly into the battery compartment from the respective left and right sidewalls, which contact elements have an essentially planar tip surrounded by surfaces which are slanting in directions towards the rear wall and away from the rear wall respectively.

The provision of contact elements, as described for the ninth and tenth aspects ensures that the battery does not have the possibility of being accelerated towards the side walls of the battery compartment during vehicle travel. Elimination of the possibility of such acceleration makes it possible to reduce the dimensions of the battery console, thus ensuring low cost without compromising the safety of the arrangement. The provision of slanting surfaces facilitates mounting/dismounting of a battery to the battery compartment.

### Brief description of the drawings

In the following, embodiments herein will be described in greater detail by way of example only with reference to attached drawings, in which
Fig. 1 is a schematic illustration of one embodiment of a battery compartment or battery tray of a battery console in accordance with the present application.
Fig. 2 is a schematic illustration of one embodiment of a clamping member or bracket of a battery console in accordance with the present application.
Fig. 3 is a schematic illustration of an embodiment of a battery console in accordance with the present application adapted to receive a full-length battery.

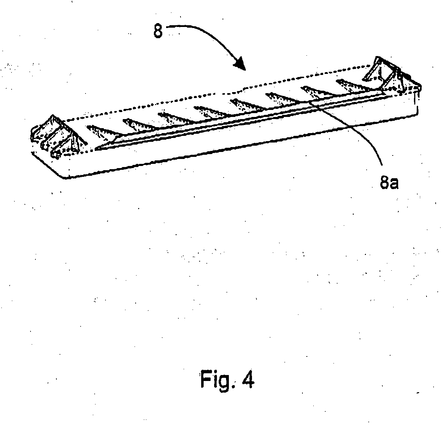

Fig. 4 is a schematic illustration of one embodiment of a spacer adaptor for adapting a battery console in accordance with the present application to a reduced-length battery.

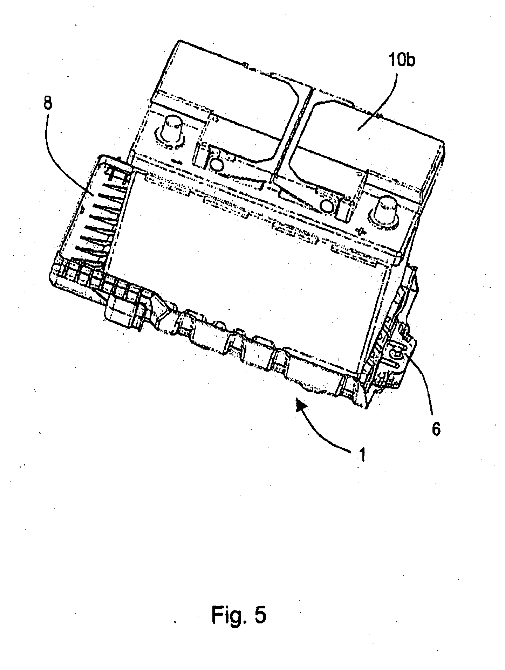

Fig. 5 is a schematic illustration of an embodiment of a battery console in accordance with the present application adapted to receive a reduced-length battery.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

### Description of embodiments

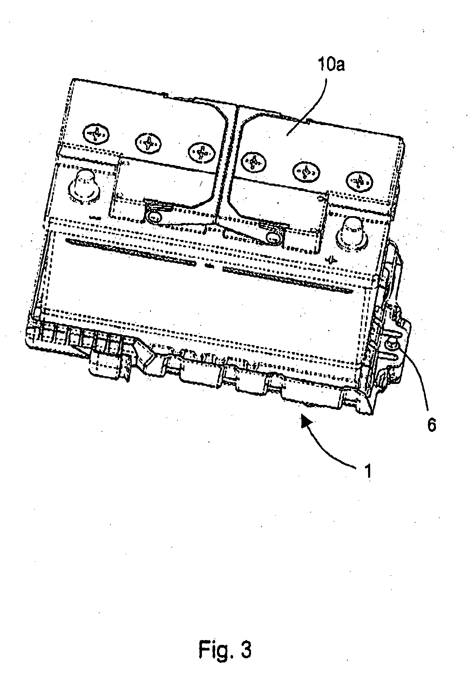

In overview, embodiments herein relate to a battery console 1 for fixing a battery, such as a starter battery, to a vehicle. Such a battery console with a battery mounted therein is illustrated in figure 3.

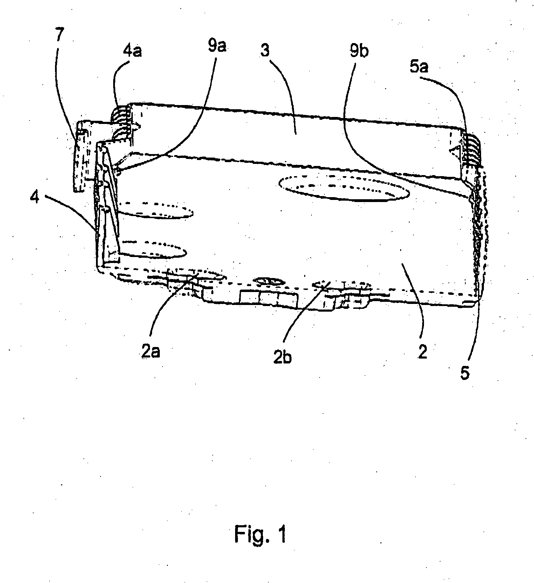

The battery console 1 comprises a battery compartment or battery tray, as illustrated in figure 1, which comprises a floor 2, a rear wall 3, and respective left 4 and right 5 sidewalls. A clamping member 6 is provided for fixation of a battery 10a, 10b to the battery compartment.

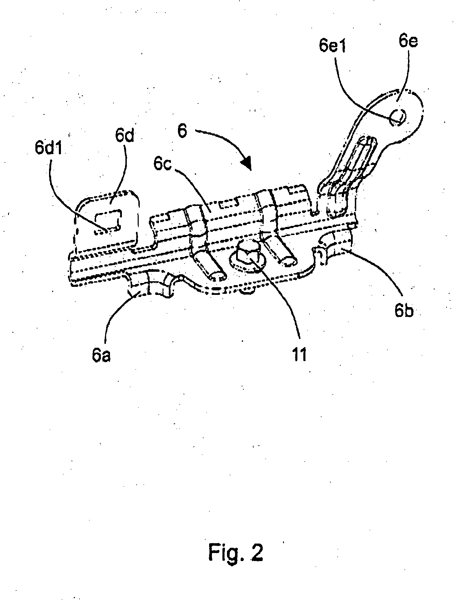

The clamping member, illustrated in isolation in figure 2, is a bracket 6 which is attachable to the floor 2 of the battery compartment. The bracket 6 has a retaining flange 6c for at least partially clamping a bottom flange of a battery 10a, 10b placed in the battery compartment.

The respective left 4 and right 5 sidewalls, adjacent to the rear wall 3, has a respective channeled section 4a, 5a for partially receiving the bottom flange of a battery 10a, 10b placed in the battery compartment. Upon mounting a battery 10a, 10b is placed at the floor 2 of the battery compartment in front of the channeled sections 4a, 5a after which the battery 10a, 10b is slid towards the rear wall 3 such that the outwardly protruding bottom flanges thereof enters the channeled sections 4a, 5a which then retains the battery through their extensions above the outwardly protruding bottom flanges of the battery 10a, 10b.

Alternatively, it is also possible to provide a channeled section (not shown) for partially receiving the bottom flange of a battery 10a, 10b placed in the battery compartment as described above along the rear wall 3. In this case it may also be possible to shorten the a respective channeled section 4a, 5a of the side walls 4, 5, thus reducing the distance the which the battery 10a, 10b has to be slid towards the rear wall 3 and thereby further facilitating mounting/dismounting of the battery 10a, 10b. Furthermore, the respective channeled sections also provides for retaining the battery in the battery compartment should the battery for some reason be accelerated upwards from the battery compartment, i.e. in a direction away from the floor thereof.

The bracket 6 may further have a first 6a and a second 6b downwardly protruding flange and the floor 2 of the battery compartment may then be provided with two openings 2a, 2b for receiving the first 6a and the second 6b downwardly protruding flanges of the bracket 6 when attached to the floor 2 of the battery compartment. Such downwardly protruding flanges 6a, 6b and complementary openings 2a, 2b facilitates positioning of the bracket 6 during mounting and also provides an anchoring of the bracket 6 to the battery compartment providing an improved ability to withstand high loads upon the assembly caused by acceleration of the battery 10a, 10b.

The battery compartment may further be provided with one or more wiring attachment points 7. These wiring attachment points 7 may be integrally formed with the battery compartment and thus eliminate the need for separate cable fixing brackets.

At least one of the one or more wiring attachment points 7 which is integrally formed with the battery compartment may be essentially hook shaped and protrude outwardly of the battery compartment from either of the rear wall 3 or the respective left 4 and right 5 sidewalls. This open hook like shape, as illustrated in figure 1, facilitates that cables of the wiring are inserted into the hook like shaped attachment point 7 from the open side and clamped thereby in such a way that, e.g. during mounting a battery cable may be pulled upwards through the hook like shaped attachment point 7, attached to a pole of the battery 10a, 10b, and thereafter pushed back down through the hook like shaped attachment point 7.

The battery console may further comprise an optional spacer adaptor 8 or spreader for being slid into the channeled sections 4a, 5a and thus received and held by the respective channeled sections 4a, 5a adjacent the rear wall 3, and, if provided, received and held by the optional channeled section (not shown) along the rear wall 3. This optional spacer adaptor 8 makes it possible to use the same battery console and bracket 6 also for mounting of a reduced-length battery 10b without the provision of additional attachment points for the bracket 6 as the reduced-length battery 10b will be displaced towards the bracket 6. The provision of a single bracket attachment point allows for maintaining a low weight design, e.g. as only one threaded insert is required in case of a threaded bolt being used for attachment of the bracket 6 to the battery compartment. The spacer adaptor 8 may further be provided with at least one battery support flange 8a for at least partially receiving the bottom flange of a battery 10b placed in the battery compartment. The battery support flange 8a generally is directed away from the rear wall 3 when received and held by the respective channeled sections 4a, 5a adjacent thereto and provides for further improved retention of a reduced-length battery 10b mounted to the battery compartment.

The bracket 6 may further comprise one or more wiring attachment points 6d1, 6e1. These wiring attachment points 6d1, 6e1 may be integrally formed with the bracket 6. The bracket 6 may further be made from a single piece of plate steel. The wiring attachment points 6d1, 6e1 may be provided at flanges 6d, 6e protruding generally upwardly from the floor 2, as seen when the bracket 6 is attached to the battery compartment.

Further, in order to ensure that the battery does not have the possibility of being accelerated towards the side walls 4, 5 of the battery compartment during vehicle travel a respective contact element 9a, 9b may be provided in the respective channeled section 4a, 5a. The respective contact element 9a, 9b protrude inwardly into the battery compartment from the respective left 4 and right 5 sidewalls. The contact elements 9a, 9b may further have an essentially planar tip surrounded by surfaces which are slanting in directions towards the rear wall 3 and away from the rear wall 3 respectively, thus mounting/dismounting of a battery 10a, 10b to the battery compartment through sliding the protruding bottom flanges of the battery 10a, 10b into the channeled sections 4a, 5a is facilitated. Upon mounting a battery 10a, 10b may thus be slid into the channeled sections 4a, 5a such that it locks to the battery compartment at both sides 4, 5 of the rear wall 3.

In accordance with the present application is also envisaged a vehicle comprising a battery console 1 as described above.

## Claims

1. A battery console (1) for a vehicle having a battery compartment comprising a floor (2) and a clamping member (6) for fixation of a battery (10a, 10b) to the battery compartment,
wherein the battery compartment further comprises a rear wall (3), and respective left (4) and right (5) sidewalls, which walls (3, 4, 5) respectively extend fully along the rear, left and right sides of the floor (2); and
wherein the clamping member is a bracket (6) which is attachable to the floor (2) of the battery compartment at a side of the floor (2) opposing the rear wall (3) and which bracket (6) has a retaining flange (6c) for at least partially clamping a bottom flange of a battery (10a, 10b) placed in the battery compartment; and
**characterized in that** the respective left (4) and right (5) sidewall directly adjacent to the rear wall (3) and connected thereto has a respective channeled section (4a, 5a), which extend partially along the respective left (4) and right (5) sidewall, which respective channeled section (4a, 5a) is provided for partially receiving the bottom flange,of a battery (10a, 10b) placed in the battery compartment.

2. A battery console (1) according to claim 1, **characterized in that** the bracket (6) further has a first (6a) and a second (6b) downwardly protruding flange and the floor (2) is provided with two openings (2a, 2b) for receiving the first (6a) and the second (6b) downwardly protruding flanges of the bracket (6) when attached to the floor (2) of the battery compartment.

3. A battery console (1) according to any one of claims 1 to 2, **characterized in that** the battery compartment is provided with one or more wiring attachment points (7), which wiring attachment points (7) are integrally formed with the battery compartment.

4. A battery console (1) according to claim 3, **characterized in that** at least one of the one or more wiring attachment points (7) integrally formed with the battery compartment is essentially hook shaped and protrudes outwardly of the battery compartment from either of the rear wall (3) or the respective left (4) and right (5) sidewalls.

5. A battery console (1) according to any one of claims 1 to 4, **characterized in that** it further comprises a spacer adaptor (8) for being received and held adjacent the rear wall (3) by the respective channeled sections (4a, 5a).

6. A battery console (1) according to claim 5, **characterized in that** the spacer adaptor (8) further is provided with at least one battery support flange (8a) for at least partially receiving the bottom flange of a battery (10b) placed in the battery compartment, which battery support flange generally is directed away from the rear wall (3) when received and held adjacent thereto.

7. A battery console (1) according to any one of claims 1 to 6, **characterized in that** the bracket (6) further comprises one or more wiring attachment points (6d1, 6e1), which wiring attachment points (6d1, 6e1) are integrally formed with the bracket (6).

8. A battery console (1) according to claim 7, **characterized in that** the bracket (6) is made from a single piece of plate steel and that the wiring attachment points (6d1, 6e1), when the bracket (6) is attached to the battery compartment, are provided at flanges (6d, 6e) protruding generally upwardly from the floor (2).

9. A battery console (1) according to any one of claims 1 to 8, **characterized in that** a respective contact element (9a, 9b) is provided in the respective channeled section (4a, 5a).

10. A battery console (1) according to claim 9, **characterized in that** the respective contact elements (9a, 9b) protrudes inwardly into the battery compartment from the respective left (4) and right (5) sidewalls, which contact elements (9a, 9b) have an essentially planar tip surrounded by surfaces which are slanting in directions towards the rear wall (3) and away from the rear wall (3) respectively.

11. A vehicle **characterized in that** it comprises a battery console (1) according to any one of claims 1 to 10.

## Patentansprüche

1. Batteriekonsole (1) für ein Fahrzeug mit einem Batteriefach, umfassend einen Boden (2) und ein Klemmelement (6) zur Befestigung einer Batterie (10a, 10b) an dem Batteriefach,
wobei das Batteriefach ferner eine hintere Wand (3) und entsprechende linke (4) und rechte (5) Seitenwände umfasst, wobei sich die Wände (3, 4, 5) jeweils vollständig entlang der hinteren, linken und rechten Seite des Bodens (2) erstrecken; und
wobei das Klemmelement ein Bügel (6) ist, der an dem Boden (2) des Batteriefachs an der Seite des Bodens (2) gegenüber der hinteren Wand (3) befestigt werden kann, wobei der Bügel (6) einen Halteflansch (6c) aufweist, um mindestens teilweise einen unteren Flansch einer Batterie (10a, 10b) einzuklemmen, der in dem Batteriefach angeordnet ist;
**dadurch gekennzeichnet, dass**
die jeweilige linke (4) und rechte (5) Seitenwand, die direkt an die hintere Wand (3) angrenzt und damit verbunden ist, einen jeweiligen Kanalabschnitt (4a, 5a) aufweist, der sich teilweise entlang der jeweiligen linken (4) und rechten (5) Seitenwand erstreckt, wobei der jeweilige Kanalabschnitt (4a, 5a) zur teilweisen Aufnahme des unteren Flansches einer Batterie (10a, 10b) bereitgestellt ist, der in dem Batteriefach angeordnet ist.

2. Batteriekonsole (1) nach Anspruch 1, **dadurch gekennzeichnet, dass** der Bügel (6) weiterhin einen ersten (6a) und einen zweiten (6b) nach unten vorstehenden Flansch aufweist, und der Boden (2) mit zwei Öffnungen (2a, 2b) zum Aufnehmen des ersten (6a) und des zweiten (6b) nach unten vorstehenden Flansches des Bügels (6) bereitgestellt ist, wenn dieser am Boden (2) des Batteriefachs befestigt ist.

3. Batteriekonsole (1) nach einem der Ansprüche 1 bis 2, **dadurch gekennzeichnet, dass** das Batteriefach mit einem oder mehreren Verdrahtungsbefestigungspunkten (7) bereitgestellt ist, wobei die Verdrahtungsbefestigungspunkte (7) einstückig mit dem Batteriefach ausgebildet sind.

4. Batteriekonsole (1) nach Anspruch 3, **dadurch gekennzeichnet, dass** mindestens einer des einen oder der mehreren Verdrahtungsbefestigungspunkte (7), die einstückig mit dem Batteriefach ausgebildet sind, im Wesentlichen die Form eines Hakens aufweist und nach außen aus dem Batteriefach entweder aus der hinteren Wand (3) oder der entsprechenden linken (4) oder rechten (5) Seitenwand herausragt.

5. Batteriekonsole (1) nach einem der Ansprüche 1 bis 4, **dadurch gekennzeichnet, dass** diese ferner einen Abstandshalter-Adapter (8) umfasst der ausgelegt ist, um angrenzend an die hintere Wand (3) von den entsprechenden Kanalabschnitten (4a, 5a) aufgenommen und gehalten zu werden.

6. Batteriekonsole (1) nach Anspruch 5, **dadurch gekennzeichnet, dass** der Abstandshalter-Adapter (8) weiterhin mit mindestens einem Batteriestützflansch (8a) bereitgestellt ist, der mindestens teilweise den unteren Flansch einer Batterie (10b), die in dem Batteriefach angeordnet ist, aufnimmt, wobei der Batteriestützflansch im Allgemeinen weg von der hinteren Wand (3) weist, wenn er angrenzend daran aufgenommen und gehalten wird.

7. Batteriekonsole (1) nach einem der Ansprüche 1 bis 6, **dadurch gekennzeichnet, dass** der Bügel (6) ferner einen oder mehrere Verdrahtungsbefestigungspunkte (6d1, 6e1) umfasst, wobei die Verdrahtungsbefestigungspunkte (6d1, 6e1) einstückig mit dem Bügel (6) ausgebildet sind.

8. Batteriekonsole (1) nach Anspruch 7, **dadurch gekennzeichnet, dass** der Bügel (6) aus einem einzigen Stück Stahlblech hergestellt ist und dadurch, dass die Verdrahtungsbefestigungspunkte (6d1, 6e1) an den Flanschen (6d, 6e) bereitgestellt sind, die im Allgemeinen nach oben aus dem Boden (2) hervorstehen, wenn der Bügel (6) an dem Batteriefach befestigt ist.

9. Batteriekonsole (1) nach einem der Ansprüche 1 bis 8, **dadurch gekennzeichnet, dass** ein entsprechendes Kontaktelement (9a, 9b) in dem entsprechenden Kanalabschnitt (4a, 5a) bereitgestellt ist.

10. Batteriekonsole (1) nach Anspruch 9, **dadurch gekennzeichnet, dass** die jeweiligen Kontaktelemente (9a, 9b) nach innen in das Batteriefach von der jeweiligen linken (4) und rechten (5) Seitenwand ragen, wobei die Kontaktelemente (9a, 9b) eine im Wesentlichen flache Spitze aufweisen, die von Oberflächen, die in Richtung der hinteren Wand (3) bzw. weg von der hinteren Wand (3) geneigt sind, umgeben sind.

11. Fahrzeug, **dadurch gekennzeichnet, dass** es eine Batteriekonsole (1) nach einem der Ansprüche 1 bis 10 umfasst.

## Revendications

1. Support de batterie (1) pour un véhicule comportant un compartiment pour batterie comprenant un fond (2) et un organe de serrage (6) pour la fixation d'une batterie (10a, 10b) au compartiment pour batterie,
le compartiment pour batterie comprenant en outre une paroi arrière (3), et des parois latérales gauche (4) et droite (5) respectives, lesdites parois (3, 4, 5) s'étendant respectivement sur la longueur entière des côtés arrière, gauche et droit du fond (2) ; et
l'organe de serrage étant une équerre (6) qui peut être attachée au fond (2) du compartiment pour batterie au niveau d'un côté du fond (2) opposé à la paroi arrière (3), ladite équerre (6) comportant une partie saillante de retenue (6c) servant à serrer au moins une partie d'une partie saillante inférieure de batterie (10a, 10b) placée dans le compartiment pour batterie ; et
**caractérisé en ce que** la paroi latérale gauche (4) ou droite (5) respective directement adjacente à la paroi arrière (3) et raccordée à celle-ci comporte une section formant gorge respective (4a, 5a) qui s'étend sur une partie de la longueur de la paroi latérale gauche (4) ou droite (5) respective, ladite section formant gorge respective (4a, 5a) étant prévue pour recevoir une partie de la partie saillante inférieure d'une batterie (10a, 10b) placée dans le compartiment pour batterie.

2. Support de batterie (1) selon la revendication 1, **caractérisé en ce que** l'équerre (6) comporte en outre une première (6a) et une deuxième (6b) partie saillante s'étendant vers le bas et le fond (2) est doté de deux ouvertures (2a, 2b) destinées à recevoir les première (6a) et deuxième (6b) parties saillantes s'étendant vers le bas de l'équerre (6) lorsqu'elle est attachée au fond (2) du compartiment pour batterie.

3. Support de batterie (1) selon l'une quelconque des revendications 1 et 2, **caractérisé en ce que** le compartiment pour batterie est doté d'un ou plusieurs points d'attache de câblage (7), lesdits points d'attache de câblage (7) étant formés d'un seul tenant avec le compartiment pour batterie.

4. Support de batterie (1) selon la revendication 3, **caractérisé en ce que** le ou au moins l'un des points d'attache de câblage (7) formés d'un seul tenant avec le compartiment pour batterie est essentiellement en forme de crochet et fait saillie vers l'extérieur du compartiment pour batterie à partir soit de la paroi arrière (3) soit des parois latérales gauche (4) et droite (5) respectives.

5. Support de batterie (1) selon l'une quelconque des revendications 1 à 4, **caractérisé en ce qu'**il comprend en outre un organe d'ajustement formant entretoise (8) destiné à être reçu et maintenu en position adjacente à la paroi arrière (3) par les sections formant gorges respectives (4a, 5a).

6. Support de batterie (1) selon la revendication 5, **caractérisé en ce que** l'organe d'ajustement formant entretoise (8) est en outre muni d'au moins une partie saillante de maintien de batterie (8a) destinée à recevoir au moins une partie de la partie saillante inférieure d'une batterie (10b) placée dans le compartiment pour batterie, ladite partie saillante de maintien de batterie étant généralement orientée dans une direction s'éloignant de la paroi arrière (3) lorsqu'elle est reçue et maintenue en position adjacente à celle-ci.

7. Support de batterie (1) selon l'une quelconque des revendications 1 à 6, **caractérisé en ce que** l'équerre (6) comprend en outre un ou plusieurs points d'attache de câblage (6d1, 6e1), lesdits points d'attache de câblage (6d1, 6e1) étant formés d'un seul tenant avec l'équerre (6).

8. Support de batterie (1) selon la revendication 7, **caractérisé en ce que** l'équerre (6) est constituée d'une seule pièce de tôle d'acier et **en ce que** les points d'attache de câblage (6d1, 6e1) sont, lorsque l'équerre (6) est attachée au compartiment pour batterie, disposés au niveau de parties saillantes (6d, 6e) s'étendant généralement vers le haut à partir du fond (2).

9. Support de batterie (1) selon l'une quelconque des revendications 1 à 8, **caractérisé en ce qu'**un élément de contact respectif (9a, 9b) est prévu dans la section formant gorge respective (4a, 5a).

10. Support de batterie (1) selon la revendication 9, **caractérisé en ce que** les éléments de contact respectifs (9a, 9b) font saillie vers l'intérieur dans le compartiment pour batterie à partir des parois latérales gauche (4) et droite (5) respectives, lesdits éléments de contact (9a, 9b) comportant une extrémité essentiellement plane entourée par des surfaces qui sont inclinées dans des directions s'approchant de la paroi arrière (3) et s'éloignant de la paroi arrière (3) respectivement.

11. Véhicule **caractérisé en ce qu'**il comprend un support de batterie (1) selon l'une quelconque des revendications 1 à 10.
